# EUROPEAN PATENT SPECIFICATION

(11) **EP 2 952 293 B1**
(45) Date of publication and mention of the grant of the patent: **28.09.2016**
(21) Application number: 13723528.9
(22) Date of filing: 04.02.2013
(51) Int. Cl.: B23Q 11/12

(54) **BORING MACHINE RAM, BORING MACHINE AND METHOD FOR COOLING THE BEARINGS OF A RAM IN A BORING MACHINE**
SCHLITTEN EINER BOHRMASCHINE, BOHRMASCHINE UND VERFAHREN ZUM KÜHLEN DER LAGER DES SCHLITTENS IN DER BOHRMASCHINE
BÉLIER POUR ALÉSEUSE, ALÉSEUSE ET PROCÉDÉ DE RÉFRIGÉRATION DE ROULEMENTS D'UN BÉLIER DANS UNE ALÉSEUSE

(43) Date of publication of application: 09.12.2015
(73) Proprietor: Bostek Innovation S.L.U., 20159 Asteasu (Gipuzkoa) (ES)
(72) Inventor: Dravasa Gurruchaga, Juan José, E-20159 Asteasu (Guipuzcoa) (ES)
(74) Representative: Balder IP Law, S.L.
(86) International application number: PCT/ES2013/070060
(87) International publication number: WO 2014/118400

(56) References cited:
- EP-A1- 2 529 883
- EP-A2- 0 458 499
- JP-A- 2000 015 541

## Description

### TECHNICAL FIELD

The invention falls within the field of boring machines.

### BACKGROUND OF THE INVENTION

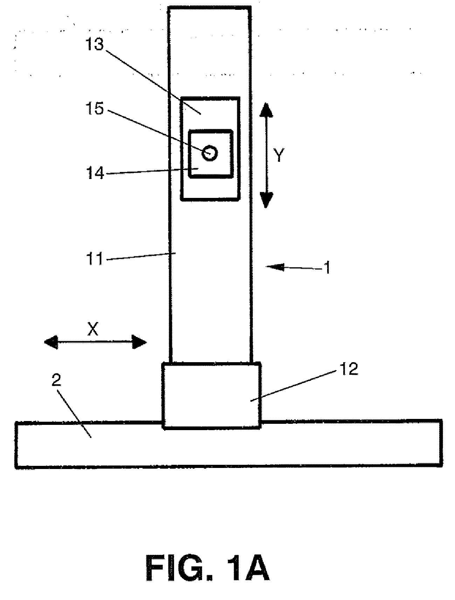

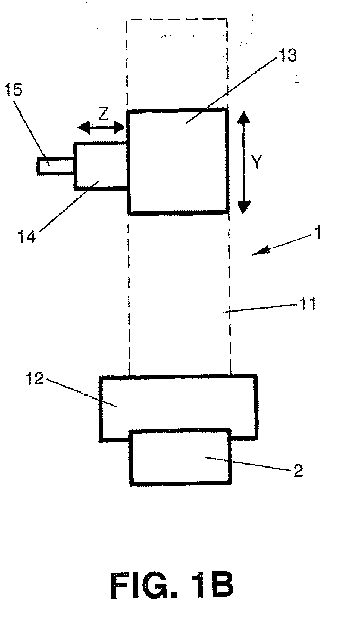

Figures 1A and 1B represent a boring machine 1, which comprises a column or structure 11 mounted on a base 12, which in turn is mounted on a horizontal guide-support 2 mounted on the floor. The boring machine 1 is moveable along said guide-support 2 according to a horizontal axis X. This degree of freedom is conventionally used so that the machine remains adequately positioned to face the part that is going to be subjected to a machining process.

The boring machine further comprises a carriage 13 provided with the ram 14 and the bar 15. The bar 15 is a rod configured to rotate with respect to the ram 14.

As it has been illustrated in a schematic manner in figures 1A and 1B, the carriage 13, which is moveable along the axis X together with the column 11 and the rest of the boring machine 11, is also moveable vertically along the structure 11, according to the axis Y, a movement that allows placing the ram 14 and the bar 15 at the appropriate height for the machining of the piece.

On the other hand, the ram 14 is a type of arm that enters and exits with regard to the carriage 13, generally actuated by a spindle (not illustrated in figures 1A and 1B), to approach the bar 15, which carries the tool (not illustrated in figures 1A and 1B) to the part to be machined. That is to say, the ram is moveable according to a horizontal axis Z, perpendicular to the previously mentioned axis X. Also, the bar 15 can be moveable according to this said horizontal axis Z, with regard to the ram; that is to say, the bar 15 can be axially moveable with regard to the ram. On the other hand, the bar is associated to actuating means that cause the bar to rotate with regard to the ram, in order to make the tool mounted in the end of the bar to rotate. The boring machine includes actuating and control means to produce these movements according to the X, Y and Z axes, in a controlled way.

This type of boring machine is widely known and it is not necessary to describe, in more detail, the existing options as far as control and movement generation are concerned. Since the described movements allow moving the bar with the tool according to the three orthogonal X, Y and Z axes, the object to be machined can be placed on a fixed or rotating platform.

In the boring machines, the bar usually is housed in a jacket and coupled to the jacket in such a way that the bar rotates with the jacket, and in addition, it is able to perform an axial movement with regard to the jacket, according to the aforementioned horizontal axis Z. Generally, this is accomplished by a keyed coupling. Therefore, the rotating movement of the bar is generated by the jacket rotation which is transmitted to the bar through the key. The jacket rotates with regard to the ram supported on a series of bearings.

When the boring machine is operating, with the jacket and the bar rotating at a high speed, a great amount of heat is generated. The heating of the machine components causes problems, among other things because it can give rise to thermal movements, which can adversely affect the accuracy of the positioning of the tool, for instance. This may be extremely serious given that this type of machines must operate with utmost precision. Therefore, it could be necessary to have some type of cooling system for the bar, for instance.

EP-2529883-A1 describes a system for cooling and lubricating the bar of a boring machine. The bar is keyed with a jacket in such a way that it rotates with the jacket so it can move axially inside the jacket. The jacket is arranged in a rotary manner on the inner peripheral surface of the ram body, supported on a plurality of bearings, some of which form a front set of bearings, arranged closer to the front end of the bar than the remaining bearings. Next to the front set of bearings, and more particularly behind the front set of bearings, as seen from the front portion of the bar, there is a rotary joint with a lubricating oil inlet that communicates with an inner channel in the jacket. This inner channel enables the lubricant oil to flow forward inside the jacket, overflowing the position of the front set of bearings and reaching a point close to the front portion of the bar, where said inner channel in the jacket leads into a helical channel formed in the inner surface of the jacket; the radially inner portion of the channel is closed by the bar itself. The lubricant oil can flow through said channel towards the rear portion of the jacket, in contact with the bar, and thus lubricating and cooling the bar.

Even though this lubrication and cooling can be adequate to prevent an excessive overheating of the bar and therefore an excessive thermal expansion of the bar, it has been deemed that it does not sufficiently avoid that some of the heat generated in the front area of the bar may affect the front set of bearings, to which the front area of the bar is thermally connected through the jacket. This may cause problems, since a heating of the bars may give rise to thermal expansions that could affect the bearings performance. For example, an overheating of the radially inner portions of the bearings, that is to say, of the closest portions to the bar, may have as a result a thermal expansion of said radially inner portion, the inner tracks of the bearings moving outward in the radial direction, something that can give rise to blockages, or at least to an increase of the friction between components of the bearings when the jacket and the bar rotate with respect to the ram.

### DESCRIPTION OF THE INVENTION

A first aspect of the invention relates to a boring machine ram, which comprises a ram body, a jacket mounted in a rotary manner on the ram body by means of a plurality of bearings, each comprising a radially inner portion coupled to the jacket so that it rotates with the jacket, and a fixed radially outer portion. In this context, the term "fixed" indicates that it does not rotate with the jacket; generally, this radially outer portion is fixed to the ram body. The term "radially inner" implies that it concerns a portion closer to the bar in the radial direction, and the term "radially outer" implies that it concerns a farthest portion from the bar, in the radial direction, that is to say, in the perpendicular direction to the longitudinal axis of the bar. The ram further comprises, a bar mounted in the jacket so it rotates with the jacket, for example, since it is coupled to the jacket by means of a key-keyway coupling. Furthermore, the ram also comprises at least one circuit for a cooling fluid. In some embodiments of the invention, the cooling fluid can be cold oil that reaches the circuit comprised into the ram from a cooling device or system.

According to the invention, said circuit comprises at least one section configured in such a way that the cooling fluid comes into direct contact with the radially inner portion of at least one of the bearings, preferably, of several bearings. In this way, it is possible for the cooling fluid to come into contact with the radially inner portion of one or several bearings, for example, all the bearings, or the bearings farther on the front, which often are the most exposed to the heat generated when the boring machine is operating. In this way, an efficient and effective cooling of the radially inner portions of the pertinent bearings is accomplished, minimizing the risk of an overheating and/or excessive thermal expansion thereof, and the consequences that his implies as far as a friction increase between the mobile portions of the bearings, blockage risks, etc., is concerned.

In some embodiments of the invention, the cooling fluid can be oil, and/or can be a lubricating fluid, which can reach the circuit from a device or a cooling system.

In some embodiments of the invention, said circuit presents at least one first cooling section in an outer surface of the jacket, at least one part of said first cooling section being externally delimited, in the radial direction, by said radially inner portion of at least one of said bearings. That is to say, the cooling fluid can pass through said section, between an outer surface of the actual jacket, and the radially inner portion of one or more bearings, thus achieving an efficient cooling of the bearings.

In some embodiments of the invention, said plurality of bearings comprises at least one front bearing (in this text, the term "front" makes reference to the closest position to the front portion of the bar, which is the portion wherein the tool will be placed), wherein said first cooling section is arranged in correspondence to said, at least one, front bearing. As it can be deducted from what has been described above, the front bearings could be those most in need of an adequate cooling, given that they are closer to the main heat source.

In some embodiments of the invention, said first cooling section comprises a helical channel in said outer surface of the jacket, wherein at least one portion of said helical channel is externally delimited, in the radial direction, by said radially inner portion of at least one of said bearings. The usage of a helical channel facilitates a good contact between the cooling fluid and the inner surface of the radially inner portion of the bearings, when the jacket rotates.

In some embodiments of the invention, the circuit presents at least one second cooling section in an outer surface of the jacket, wherein at least one portion of said second cooling section is externally delimited, in the radial direction, by said radially inner portion of at least one of said bearings. In some embodiments of the invention, the plurality of bearings comprise at least one rear bearing (in this text, the term "rear" makes reference to the farthest position from the front portion of the bar, which is the part in which the tool will be placed), this second cooling section being arranged in correspondence with said at least one rear bearing. In this way, the rear bearings are also cooled.

In some embodiments of the invention, the second cooling section comprises a helical channel in the outer surface of the jacket, wherein at least one portion of said helical channel is externally delimited, in the radial direction, by the radially inner portion of at least one of said bearings.

In some embodiments of the invention, a section of the circuit corresponds to at least one keyway with which the coupling between the jacket and the bar is established, thus, making the most of the keyway by using it to constitute a portion of the circuit.

In some embodiments of the invention, at least one section of the circuit runs within a brace housed inside the bar, thus, making the most of the brace by using it to establish at least part of the cooling circuit, so the need for realizing ducts in the bar itself, is reduced. In some embodiments of the invention, the bar has a front end and a rear end, and the circuit comprises one cooling fluid inlet located in a rotary joint located in the brace behind the rear end of the bar. In some embodiments of the invention, the cooling fluid can be cold oil that reaches said inlet from a cooling device or system. In some embodiments of the invention, the circuit has an outlet, in correspondence with the rear end of the jacket, which communicates with an inner space of the ram. These options, either individually or jointly, can be adapted in order to establish the circuit, using a conventional structure for the jacket, the bar and the brace, as starting point.

Another aspect of the invention relates to a boring machine comprising a movable structure in the horizontal direction, according to a first horizontal axis, a carriage mounted in said structure and vertically movable according to a vertical axis, and a ram mounted in the carriage and moveable with respect to the carriage according to a second horizontal axis, perpendicular to said first horizontal axis. According to this aspect of the invention, the ram is a ram according to what has been described above.

Another aspect of the invention relates to a cooling method for the bearings of a ram in a boring machine, the ram comprising a ram body, as well as a jacket mounted in a rotary manner in the ram body by means of a plurality of bearings, each comprising, a radially inner portion coupled to the jacket in such a way that it rotates with the jacket, and a fixed radially outer portion, in line with what has been described above. Additionally, the ram comprises a bar mounted in the jacket in such a way that it turns with the jacket (for instance, because it is coupled to the jacket by means of a key and keyway coupling). The method comprises the step of pumping a cooling fluid through a cooling circuit. According to this aspect of the invention, the method comprises the step of putting said cooling fluid in contact with the radially inner portion of at least one of the bearings, preferably, of several bearings, to cool said radially inner portion. In this way, an efficient cooling is achieved of this essential part, whose heating could give rise to an excessive friction, a malfunctioning of the boring machine and even the wearing or tearing of the components thereof.

### BRIEF DESCRIPTION OF THE DRAWINGS

To complement the description and with the aim of achieving a better comprehension of the features of the invention, according to one practical embodiment thereof, attached as an integral part of the description there is a set of figures wherein by way of non-limitative example, the following has been represented:
Figures 1A and 1B are an elevational and a profile schematic view, respectively, of a boring machine according to a possible embodiment of the invention.
Figures 2A and 2B are schematic cross-section views of a ram, according to a possible embodiment of the invention.
Figures 3A-3D, are schematic views of several portions of the ram, illustrating different portions of the cooling circuit.

### DESCRIPTION OF AN EMBODIMENT OF THE INVENTION

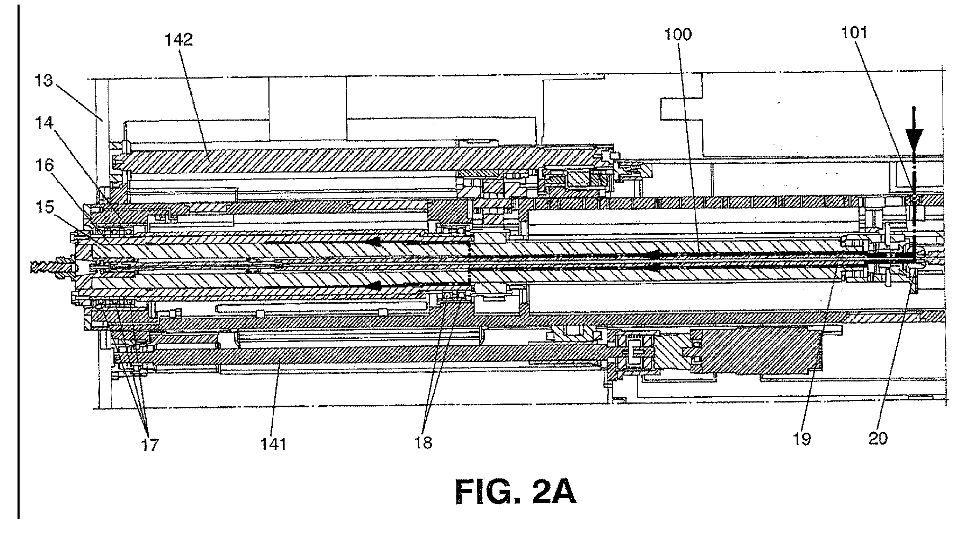

In figure 2A, a ram 14 can be observed according to an embodiment of the invention, mounted in the carriage 13 of a boring machine, for instance, a boring machine like the one that has been schematically illustrated in figure 1. The carriage includes a first spindle 141 with which the movement of the ram can be produced in the axial direction, and a second spindle 142 that is used to rotate the assembly formed by the jacket 16 and the bar 15, as is customary with boring machines. As it is customary, the bar 15 is coupled to the jacket by means of a key and keyway junction in such a way that the bar 15 rotates with the jacket 16 but it can move axially with respect to the jacket.

The bar has a central axial hole extending longitudinally through the bar 15 and wherein a brace 19 is housed, which rotates with the bar and allows releasing the tool that is coupled to the front end of the bar. The jacket 16 is mounted in the body of the ram 14 in such a way that it can rotate around its longitudinal axis, by means of a plurality of bearings, i.e., a group of front bearings 17 and a group of rear bearings 18.

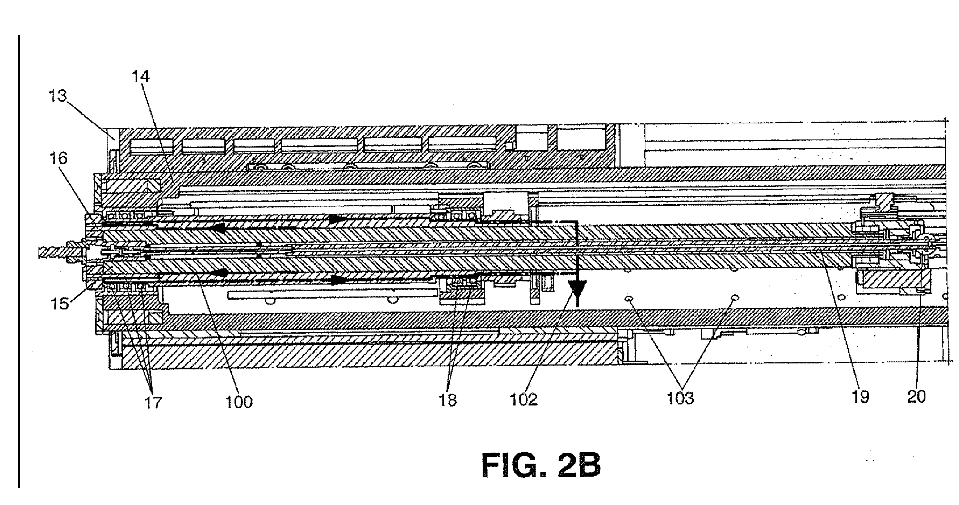

In figure 2A it can be observed how a circuit 100 for a cooling fluid has an inlet 101 in correspondence with the rear portion of the bar 15 and, more specifically, in correspondence with a rotary joint 20 located around the brace 19, which fastens the brace but allows the brace to rotate. The cooling fluid can reach said inlet 101 from a cooling unit or device (not illustrated in the figure). As it can be observed in figure 2A, from said rotary joint, the fluid can flow forwards, first within the bar 15, in correspondence with the brace 19, and later through the outer portion of the bar, between the bar 15 and the jacket 16. In figure 2B, a second portion of the circuit 100, can be observed and how it passes in contact with the radially inner portions of the front bearings 17, to return later towards the rear portion of the system, passing by the radially inner portions of the rear bearings 18, until reaching an outlet 102 where the cooling fluid exits to an inner hollow space of the ram body 14. From there it can exit the ram by gravity, falling through a series of outlet 103 holes arranged inside the ram body 14.

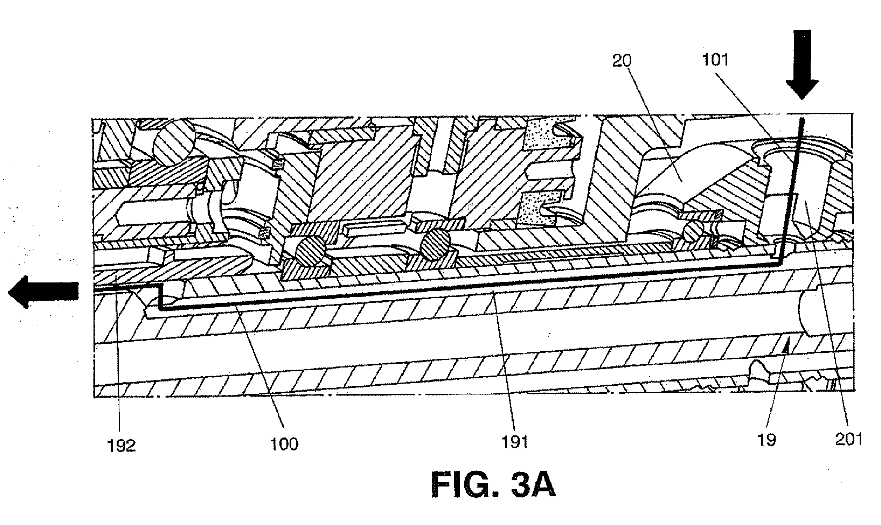

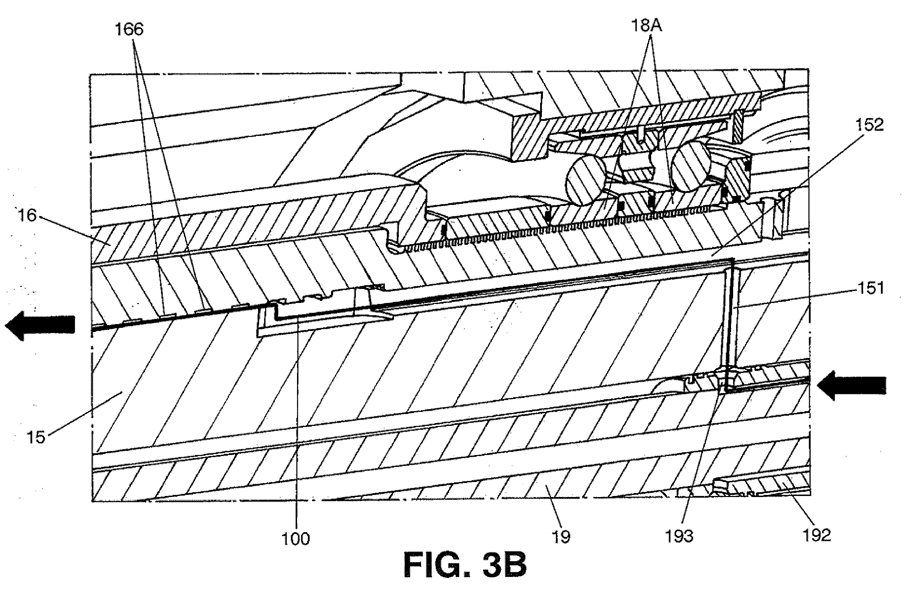

The sequence can be observed in more detail in figures 3A-3D. In figure 3A it can be observed how the inlet to the cooling fluid circuit 100 is in correspondence with an inlet hole 201 in the rotary joint 20 that is located around the brace 19, and more specifically in correspondence with a rear portion of the brace. As it can be observed in figure 3A, the brace wall includes a duct 191 that establishes part of the cooling fluid circuit 100, between the rotary joint 20 and a radial outlet where this duct 191 communicates with a space located between the outer wall of the brace 19, and a bushing 192 that surrounds externally part of the brace 19. The cooling fluid can pursue its course through said space, until reaching a radial outlet 193 in said bushing 192, outlet that communicates with a through hole 151 in the bar 15 wall. This through hole 151 communicates the inner hollow space of the bar 15 with the outer surface of the bar, where said through hole 151 leads into a longitudinal channel 152 that constitutes the keyway of the bar (or one of the keyways of the bar, if there are more than one), by means of which, the bar 15 remains coupled to the jacket 16 to rotate with the jacket. In correspondence with the front end of the keyway 152, the circuit is established between the outer face of the bar 15 and the inner face of the jacket 16, as it can be observed in figure 3B. Here the circuit can comprise a helical section, in the form of a helical channel 166 in the inner face of the jacket, radially delimited by the outer surface of the bar 15. In this way, the fluid passes through a helical duct and can be used to lubricate the contact surface between the jacket 16 and the bar 15. This helical section can be stretched until reaching approximately the area where the front bearings 17 are arranged.

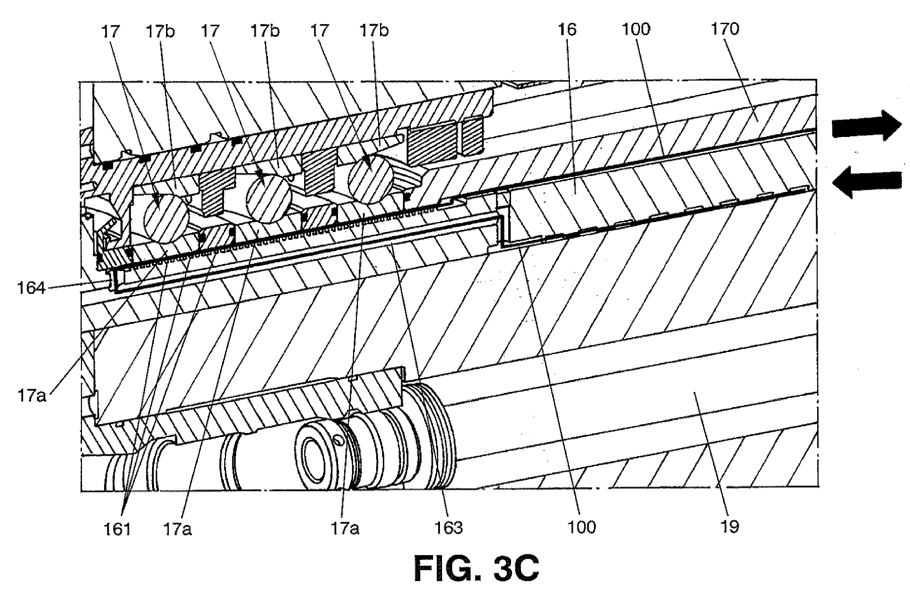

In figure 3C it can be observed how the fluid will subsequently pass to an inner channel 163 in the jacket wall. This channel 163 leads, by means of a radial outlet 164, into the outer portion of the jacket, in a position located before the front bearings 17 each having a radially outer portion 17b and another radially inner portion 17a. The radially outer portion 17b of each front bearing 17 is joined to the body ram, and the radially inner portion 17a of each front bearing 17 is joined to the jacket 16 and rotates with the jacket.

As illustrated in figure 3C, the radial outlet 164 communicates with a first duct or helical channel 161, which can be observed in the form of a plurality of small slots on the upper portion of the jacket 16, in correspondence with the front bearings 17. As it can be schematically observed in figure 3C, this helical channel or duct, which extends helically around the jacket 16 and through which the cooling fluid comes backwards, turning around the jacket, is externally delimited to a large extent, in its course by the radially inner portions 17a of the front bearings 17. In this way, a direct cooling of the radially inner portions 17a of said bearings is accomplished, thereby achieving an efficient cooling of said radially inner portions 17a, avoiding an excessive heating thereof and thus preventing the unwanted thermal expansions of these portions of the bearings.

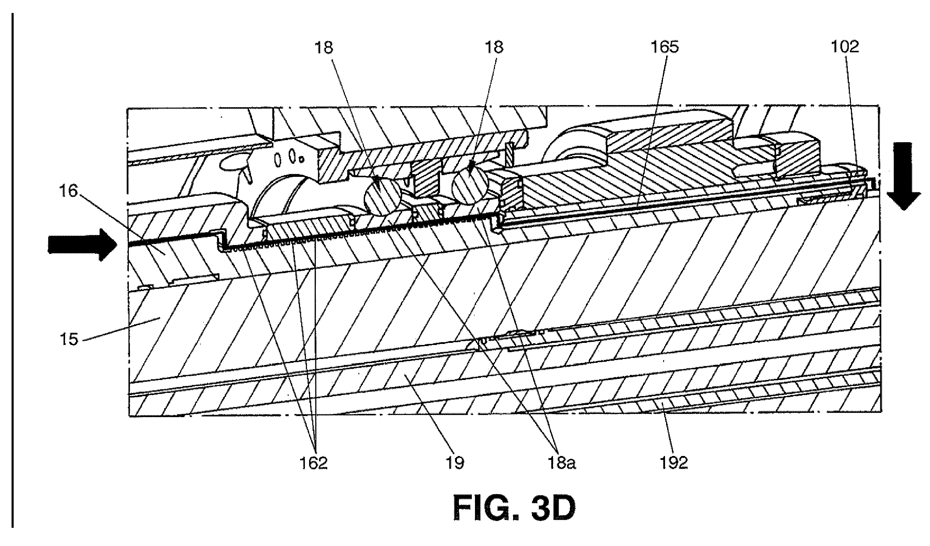

At the end of the helical channel 161, the cooling fluid circuit is established between a bearing support or spacer 170 and the outer surface of the jacket 16, and through that portion of the circuit the cooling fluid can reach, as it can be observed in figure 3D, a second duct or helical channel 162, similar to the first one, and that in an analogous manner it is used to have the cooling fluid enter into direct contact with the radially inner portions 18a of the rear bearings 18, to cool down these radially inner portions.

From there on the cooling fluid circuit extends backwards through an inner duct 165 in the jacket 16 wall, and leads into an outlet of the circuit 102 in the rear portion of the jacket 16 (see figure 3D), where the fluid passes to the inner space of the ram body 14, from where it can flow out through the holes 103 illustrated in figure 2B, to be collected and recirculated. The circulation of the cooling fluid can be carried out with a pump (not illustrated). In addition, the boring machine comprises means for controlling the temperature of the cooling fluid.

In this text, the word "comprises" and its variants (such as "comprising", etc.) must not be interpreted in an exclusive manner, that is, they do not exclude the possibility of including other elements, steps etc, in what has been described.

On the other hand, the invention is not limited to the specific embodiments that have been described but rather it also includes, for instance, the variants that can be carried out by a person having an ordinary skill in the art (for example, with regard to the choice of materials, dimensions, components, configuration, etc.), within what is inferred from the claims.

## Claims

1. A boring machine ram, comprising:
a ram body (14),
a jacket (16) mounted in a rotary manner on the ram body (14) by means of a plurality of bearings (17, 18), each comprising a radially inner portion (17a, 18a) coupled to the jacket (16) so that it rotates with the jacket (16), and a fixed radially outer portion (17b, 18b),
and a bar (15) mounted in the jacket (16) in such a way that it rotates with the jacket (16),
the ram comprising at least one circuit for a cooling fluid,
**characterized in that**
said circuit comprises at least one section configured in such a way that the cooling fluid comes into direct contact with the radially inner portion (17a, 18a) of at least one of the bearings (17, 18).

2. The boring machine ram according to claim 1, wherein said circuit presents at least one first cooling section (161) in an outer surface of the jacket (16), at least one portion of said first cooling section (161) being delimited by said radially inner portion (17a) of at least one of said bearings (17).

3. The boring machine ram according to claim 2, comprising said plurality of bearings at least one front bearing (17), said first cooling section (161) being arranged in correspondence with said, at least one, front bearing (17).

4. The boring machine ram according to any of the claims 2 and 3, wherein said first cooling section (161) comprises a helical channel in said outer surface of the jacket (16), at least one portion of said helical channel being externally delimited by said radially inner portion (17a) of at least one of said bearings (17).

5. The boring machine ram according to any of the claims 2-4, wherein said circuit presents at least one second cooling section (162) in an outer surface of the jacket (16), at least one portion of said second cooling section (162) being externally delimited by said radially inner portion (18a) of at least one of said bearings (18).

6. The boring machine ram according to claim 5, said plurality of bearings comprising at least one rear bearing (18), said second cooling section (162) being arranged in correspondence with said, at least one, rear bearing (18).

7. The boring machine ram according to any of the claims 5 and 6, wherein said second cooling section (162) comprises a helical channel in said outer surface of the jacket, at least one portion of said helical channel being externally delimited by said radially inner portion (18a) of at least one of said bearings (18).

8. The boring machine ram according to any one of the previous claims, wherein a section of said circuit corresponds to at least one keyway (152) with which the coupling between the jacket (16) and the bar (15) is established.

9. The boring machine ram according to any one of the previous claims, wherein at least one section of said circuit runs inside a brace (19) housed inside the bar (15).

10. The boring machine ram according to claim 9, wherein the bar has a front end and a rear end, and wherein the circuit comprises a cooling fluid inlet located in a rotary joint (20) located in the brace (19) behind the rear end of the bar (15).

11. The boring machine ram according to claim 10, wherein the circuit has an outlet in correspondence with a rear end of the jacket (16), which communicates with an inner space of the ram.

12. A boring machine, which comprises a structure (11), which is moveable in the horizontal direction according to a first horizontal axis (X), a carriage (13) mounted in said structure (11) and vertically moveable according to a vertical axis (Y), and a ram (14) mounted in said carriage (13) and moveable with respect to said carriage (13) according to a second horizontal axis (Z), perpendicular to said first horizontal axis (X), the ram (14) being a ram according to any one of the previous claims.

13. A cooling method for bearings of a ram in a boring machine, the ram comprising:
a ram body (14),
a jacket (16) mounted in a rotary manner in the ram body (14), by means of a plurality of bearings (17, 18) each comprising, a radially inner portion (17a, 18a) coupled to the jacket (16) in such a way that it rotates with the jacket (16), and a fixed radially outer portion (17b, 18b),
and a bar (15) mounted in the jacket (16) in such a way that it rotates with the jacket (16), the method comprising the step of pumping a cooling fluid through a cooling circuit (100),
**characterized in that**
the method comprises the step of putting said cooling fluid in contact with the radially inner portion (17a, 18a) of at least one of the bearings (17, 18), for cooling said radially inner portion (17a, 18a).

## Patentansprüche

1. Eine Bohrmaschinenramme mit:
einem Rammengehäuse (14),
einem Mantel (16), der durch eine Mehrzahl von Lagern (17, 18) rotatorisch in dem Rammengehäuse (14) angebracht ist, wobei jedes Lager einen radial inneren Teil (17a, 18a), der mit dem Mantel (16) so verbundenen ist, dass er mit dem Mantel (16) rotiert, und einen fixierten radial äußeren Teil (17b, 18b) aufweist,
und einer in dem Mantel (16) so angebrachten Stange (15), dass sie mit dem Mantel (16) rotiert,
wobei die Ramme wenigstens einen Kreislauf für eine Kühlflüssigkeit aufweist,
**dadurch gekennzeichnet, dass**
der Kreislauf wenigstens einen Abschnitt aufweist, der so konfiguriert ist, dass das Kühlmittel in direkten Kontakt mit dem radial innenliegenden Teil (17a, 18a) von zumindest einem der Lager (17,18) kommt.

2. Die Bohrmaschinenramme gemäß Anspruch 1, wobei der Kreislauf wenigstens einen ersten Kühlungsabschnitt (161) in einer äußeren Oberfläche des Mantels (16) darstellt, wobei wenigstens ein Teil des ersten Kühlungsabschnitts (161) durch den radial inneren Teil (17a) des wenigstens einen Lagers (17) begrenzt wird.

3. Die Bohrmaschinenramme gemäß Anspruch 2, wobei die Mehrzahl von Lagern wenigstens ein vorderes Lager (17) aufweist, wobei der erste Kühlungsabschnitt (161) mit dem wenigstens einen vorderen Lager (17) korrespondierend angeordnet ist.

4. Die Bohrmaschinenramme gemäß einem der Ansprüche 2 und 3, wobei der erste Kühlungsabschnitt (161) einen schraubenförmigen Kanal in der äußeren Oberfläche des Mantels (16) aufweist, wobei wenigstens ein Teil des schraubenförmigen Kanals durch den radial inneren Teil (17a) wenigstens eines der Lager (17) nach außen begrenzt wird.

5. Die Bohrmaschinenramme gemäß einem der Ansprüche 2-4, wobei der Kreislauf wenigstens einen zweiten Kühlungsabschnitt (162) in einer äußeren Oberfläche des Mantels (16) darstellt, wobei wenigstens ein Teil des zweiten Kühlungsabschnitts (162) durch den radial inneren Teil (18a) wenigstens eines der Lager (18) nach außen begrenzt wird.

6. Die Bohrmaschinenramme gemäß Anspruch 5, wobei die Mehrzahl von Lagern wenigstens ein hinteres Lager (18) aufweist, wobei der zweite Kühlungsabschnitt (162) mit dem wenigstens einen hinteren Lager (18) korrespondierend angeordnet ist.

7. Die Bohrmaschinenramme gemäß einem der Ansprüche 5 oder 6, wobei der zweite Kühlungsabschnitt (162) einen schraubenförmigen Kanal in der äußeren Oberfläche des Mantels aufweist, wobei wenigstens ein Teil des schraubenförmigen Kanals durch den radial inneren Teil (18a) wenigstens eines der Lager (18) nach außen begrenzt wird.

8. Die Bohrmaschinenramme gemäß einem der vorhergehenden Ansprüche, wobei wenigstens ein Abschnitt des Kreislaufs mit wenigstens einer Keilnut (152) korrespondiert, mit der die Verbindung zwischen dem Mantel (16) und der Stange (15) gebildet wird.

9. Die Bohrmaschinenramme gemäß einem der vorhergehenden Ansprüche, wobei wenigstens ein Abschnitt des Kreislaufs in dem in der Stange (15) untergebrachten Träger (19) verläuft.

10. Die Bohrmaschinenramme gemäß Anspruch 9, wobei die Stange ein vorderes Ende und ein hinteres Ende aufweist und wobei der Kreislauf einen in einem in dem Träger (19) hinter dem hinteren Ende der Stange (15) angeordneten Drehgelenk (20) angeordneten Kühlmitteleinlass aufweist.

11. Die Bohrmaschinenramme gemäß Anspruch 10, wobei der Kreislauf einen mit einem hinteren Ende des Mantels (16) korrespondierenden Auslass aufweist, der mit einem Innenraum der Ramme kommuniziert.

12. Eine Bohrmaschine, die eine Struktur (11), die in einer horizontalen Richtung entlang einer ersten horizontalen Achse (X) bewegbar ist, einen in der Struktur (11) angebrachten und vertikal entlang einer vertikalen Achse (Y) bewegbaren Schlitten (13) und eine in dem Schlitten (13) angebrachte und gegenüber dem Schlitten (13) entlang einer zu der ersten horizontalen Achse (X) senkrechten zweiten horizontalen Achse (Z) bewegbare Ramme (14) aufweist, wobei die Ramme (14) eine Ramme gemäß einem der vorhergehenden Ansprüche ist.

13. Ein Kühlverfahren für Lager einer Ramme in einer Bohrmaschine, wobei die Ramme aufweist:
ein Rammengehäuse (14),
einem Mantel (16), der durch eine Mehrzahl von Lagern (17, 18) rotatorisch in dem Rammengehäuse (14) angebracht ist, wobei jedes Lager einen radial inneren Teil (17a, 18a), der mit dem Mantel (16) so verbundenen ist, dass er mit dem Mantel (16) rotiert, und einen fixierten radial äußeren Teil (17b, 18b) aufweist,
und einer in dem Mantel (16) so angebrachten Stange (15), dass sie mit dem Mantel (16) rotiert, wobei das Verfahren den Schritt des Pumpens von Kühlflüssigkeit durch einen Kühlkreislauf (100) aufweist,
**dadurch gekennzeichnet, dass**
das Verfahren den Schritt des Inkontaktbringens der Kühlflüssigkeit mit dem radial inneren Teils (17a, 18a) des wenigstens einen Lagers (17, 18) zum Kühlen des radial inneren Teils (17a, 18a).

## Revendications

1. Bélier pour aléseuse, comprenant :
un corps de bélier (14),
une gaine (16) montée de manière rotative dans le corps de bélier (14) à l'aide d'une pluralité de paliers (17, 18) comprenant chacun une partie radialement interne (17a, 18a) couplée à la gaine (16) de façon à pivoter avec la gaine (16) et une partie radialement externe (17b, 18b) fixe,
et une barre (15) montée dans la gaine (16) de façon à ce qu'elle pivote avec la gaine (16),
le bélier comprenant au moins un circuit pour un liquide de refroidissement,
**caractérisé en ce que**
ledit circuit comprend au moins une section configurée de façon à ce que le liquide de refroidissement entre en contact direct avec la partie radialement interne (17a, 18a) d'au moins un des paliers (17, 18).

2. Bélier pour aléseuse selon la revendication 1, dans lequel ledit circuit présente au moins une première section de refroidissement (161) dans une surface extérieure de la gaine (16), au moins une partie de ladite première section de refroidissement (161) étant délimitée par ladite partie radialement interne (17a) d'au moins un desdits paliers (17).

3. Bélier pour aléseuse selon la revendication 2, ladite pluralité de paliers comprenant au moins un palier avant (17), ladite première section de refroidissement (161) étant agencé en correspondance avec ledit au moins un palier avant (17).

4. Bélier pour aléseuse selon l'une quelconque des revendications 2 et 3, dans lequel ladite première section de refroidissement (161) comprend un canal hélicoïdal dans ladite surface extérieure de la gaine (16), au moins une partie dudit canal hélicoïdal étant délimitée extérieurement par ladite partie radialement interne (17a) d'au moins un desdits paliers (17).

5. Bélier pour aléseuse selon l'une quelconque des revendications 2 à 4, dans lequel ledit circuit présente au moins une seconde section de refroidissement (162) dans une surface extérieure de la gaine (16), au moins une partie de ladite seconde section de refroidissement (162) étant délimitée extérieurement par ladite partie radialement interne (18a) d'au moins un desdits paliers (18).

6. Bélier pour aléseuse selon la revendication 5, ladite pluralité de paliers comprenant au moins un palier arrière (18), ladite seconde section de refroidissement (162) étant agencée en correspondance avec ledit au moins un palier arrière (18).

7. Bélier pour aléseuse selon l'une quelconque des revendications 5 et 6, dans lequel ladite seconde section de refroidissement (162) comprend un canal hélicoïdal dans ladite surface extérieure de la gaine, au moins une partie dudit canal hélicoïdal étant délimitée extérieurement par ladite partie radialement interne (18a) d'au moins un desdits paliers (18).

8. Bélier pour aléseuse selon l'une quelconque des revendications précédentes, dans lequel une section dudit circuit correspond à au moins une rainure de clavette (152) avec laquelle est réalisé le couplage entre la gaine (16) et la barre (15).

9. Bélier pour aléseuse selon l'une quelconque des revendications précédentes, dans lequel au moins une section dudit circuit s'étend à l'intérieur d'une entretoise (19) logée à l'intérieur de la barre (15).

10. Bélier pour aléseuse selon la revendication 9, dans lequel la barre a une extrémité avant et une extrémité arrière, et dans lequel le circuit comprend une entrée de liquide de refroidissement située dans un joint rotatif (20) situé dans l'entretoise (19) derrière l'extrémité arrière de la barre (15).

11. Bélier pour aléseuse selon la revendication 10, dans lequel le circuit a une sortie en correspondance avec une extrémité arrière de la gaine (16), qui communique avec un espace interne du bélier.

12. Aléseuse, qui comprend une structure (11) qui est mobile suivant une direction horizontale selon un premier axe horizontal (X), un support (13) monté dans ladite structure (11) et qui est mobile verticalement selon un axe vertical (Y) et un bélier (14) monté dans ledit support (13) et qui est mobile par rapport audit support (13) selon un second axe horizontal (Z), perpendiculaire audit premier axe horizontal (X), le bélier (14) étant un bélier selon l'une quelconque des revendications précédentes.

13. Méthode de refroidissement de paliers d'un bélier d'une aléseuse, le bélier comprenant :
un corps de bélier (14),
une gaine (16) montée de manière rotative dans le corps de bélier (14) à l'aide d'une pluralité de paliers (17, 18) comprenant chacun une partie radialement interne (17a, 18a) couplée à la gaine (16) de façon à pivoter avec la gaine (16) et une partie radialement externe (17b, 18b) fixe,
et une barre (15) montée dans la gaine (16) de façon à ce qu'elle pivote avec la gaine (16), la méthode comprenant l'étape consistant à pomper un liquide de refroidissement par l'intermédiaire d'un circuit de refroidissement (100),
**caractérisée en ce que**
la méthode comprend l'étape consistant à mettre ledit liquide de refroidissement en contact avec la partie radialement interne (17a, 18a) d'au moins un des paliers (17, 18) pour refroidir ladite partie radialement interne (17a, 18a).
